# EUROPEAN PATENT APPLICATION

(11) **EP 4 644 086 A1**
(43) Date of publication of application: **05.11.2025**
(21) Application number: 24382482.8
(22) Date of filing: 03.05.2024
(51) Int. Cl.: B29C 45/33

(54) **SLIDER ASSEMBLY FOR INJECTION MOULDS**

(71) Applicant: Comercial de Utiles y Moldes, S.A., 08960 Sant Just Desvern, Barcelona (ES)
(72) Inventor: NAVARRA PRUNA, Alberto, 08960 SANT JUST DESVERN (Barcelona) (ES)
(74) Representative: Herrero & Asociados, S.L.

(57) **Abstract**

Slider assembly for injection molds, comprising a slider body (1); a figure insert (2) coupled to the slider body (1); a slider rail (5) along which a rack (6) moves, said rack (6) being attached to the slider body (1); and a traction element (11) that moves a pushing element (8), the pushing element (8) being provided with teeth (9) that engage with the rack (6), so that the movement of the element The traction mechanism (11) causes the movement of the slider body (1) through the rack (6) and the pushing element (8). It allows providing a slider assembly for injection molds in which movement is reduced, requiring less space than in conventional slider assemblies.

## Description

### OBJECT OF THE INVENTION

The present invention relates to a slider assembly for injection molds.

### BACKGROUND OF THE INVENTION

In the field of injection molds, slider assemblies are used to model the sides of the product to manufacture figure shapes that, through the traditional system of the conventional mold, are impossible to reproduce, since they are basically formed by a mold plate and a cavity plate, and only have a single opening movement that requires all machined parts made to be demolded in the mold opening direction.

Molds needing to manufacture pieces with figures that have shapes that could not be demoulded by the conventional procedure, require the application of mechanisms called sliders, which are responsible for transmitting displacements perpendicular to the opening of the mold during the opening and closing process, which allow the aforementioned negatives to be demolded perpendicularly during the opening of the mold and before proceeding to demold the injected product.

Thus, the slider must move on guides or rails that determine the path it must take in each particular case to allow the figure in question to be removed from the mold.

When there are carried out demolding paths considered long, that is, paths greater than 25 millimeters, the use of inclined guides is increasingly difficult, and from 35 millimeters onwards it is considered that their use is not the most appropriate.

The use of robots and magnetic plates to hold the molds in the machine is gaining more and more importance and every day more companies have these new technologies to achieve better performance in their facilities.

With these new applications, economic improvements are presented in production processes, but at the same time new, unforeseen problems arise that must be eliminated.

First of all, the magnetic plates that are attached to the machines provide significant time savings in assembling the molds in the machine, but, however, their thickness, two magnetic plates per mold, one for each plate, represents a reduction in the opening path, with the consequent difficulty for all molds with long-stroke sliders, which in many cases are forced to dispense with the use of robots, due to lack of space.

If to these drawbacks it is added the priority of using robots for operation in a mold that requires sliders with long path, the use of inclined guides is ruled out and, instead, a pneumatic or hydraulic displacement is applied with all the inconveniences that it entails. requires its application.

### DESCRIPTION OF THE INVENTION

Therefore, the objective of the present invention is to provide a slider assembly for injection molds in which movement is reduced, requiring less space than in conventional slider assemblies.

The slider assembly for injection molds according to the present invention is defined in claim 1. Additional features of the slider assembly according to the present invention are described in the dependent claims.

Specifically, the slider assembly according to the present invention comprises:
- a slider body;
- a figure insert coupled to the slider body;
- a slider rail along which a rack moves, said rack being attached to the slider body;
- a traction element that moves a pushing element, the pushing element being provided with teeth that engage with the rack, so that the movement of the traction element causes the movement of the slider body through the rack and the pushing element.

Preferably, the rack and the pushing element are perpendicular to each other.

Furthermore, a shaft preferably passes through the pushing element and the pulling element with the pushing element and the pulling element being displaceable along the shaft.

According to a preferred embodiment, the slider rail comprises a slot, through which the rack moves.

Furthermore, the rack preferably comprises a hook.

According to a preferred embodiment, the traction element is a bushing.

Preferably, the slider rail comprises a hole, preferably located in a central position, through which the pushing element and the shaft move.

It requires less space than other currently known models with similar features, since it allows the inclined guides and their angular machining to be eliminated, also eliminating the lateral guides and their precision machining.

### DESCRIPTION OF THE DRAWINGS

To complement the description being made and in order to help a better understanding of the characteristics of the invention, in accordance with a preferred example of practical embodiment thereof, a set of drawings is attached as an integral part of said description, where, for illustrative and non-limiting purposes, the following has been shown:
Figure 1 is a perspective view of the slider assembly according to the present invention in the closed mold position;
Figure 2 is a perspective view of the slider assembly according to the present invention in the open mold position;

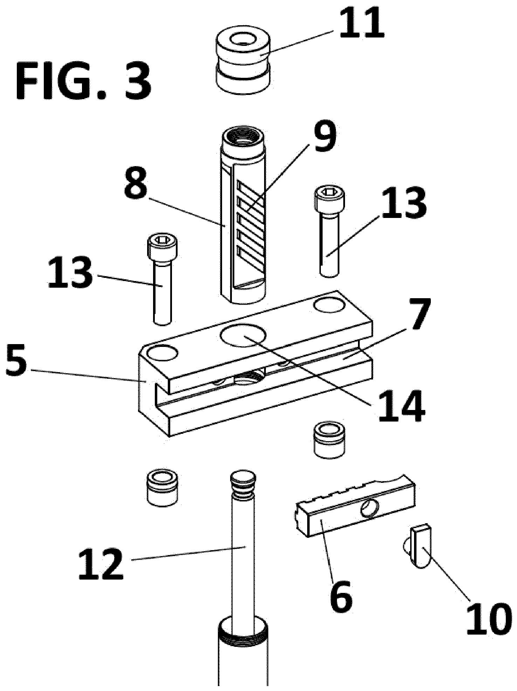

Figure 3 is an exploded perspective view of the displacement assembly of the slider assembly according to the present invention;
Figure 4 is a perspective view of the displacement assembly of the slider assembly according to the present invention in its position with the mold closed; and
Figure 5 is an exploded perspective view of the displacement assembly of the slider assembly according to the present invention in its position with the mold open.

### DESCRIPTION OF A PREFERRED EMBODIMENT OF THE INVENTION

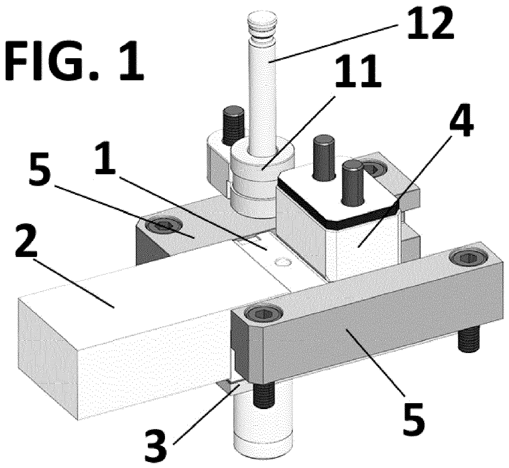

The slider assembly according to the present invention comprises a slider body (1) provided with a figure insert (2) and which is movable on a base (3), as can be seen in Figure 1.

According to the represented embodiment, the slider body (1) is a parallelepiped of certain dimensions that, longitudinally, houses the figure insert (2) at one end to machine the figure of the mold to be reproduced, while having in the opposite side an inclined plane so that a positioning wedge (4) can counteract the injection pressure of the piece to be injected.

The sliding system also comprises a slider rail (5), along which a rack (6) can slide longitudinally along a slot (7).

The movement of the rack (6) is activated by a pushing element (8) provided with teeth (9), which is placed transversely and coupled with the rack (6), so that, when pressed by either of both ends, exerts angular pressure on the rack (6), forcing it to move in the direction of the teeth (9) themselves. Furthermore, the rack (6) preferably comprises a drive coupling (10) for moving the slider body (1).

This pushing element (8) is driven into motion by a traction element (11), preferably a bushing, which is located around a shaft (12), the pushing element (8) and the traction element (11) being movable along the shaft (12), said traction element (11) being mounted on an injection plate of the mold, not shown in the figures.

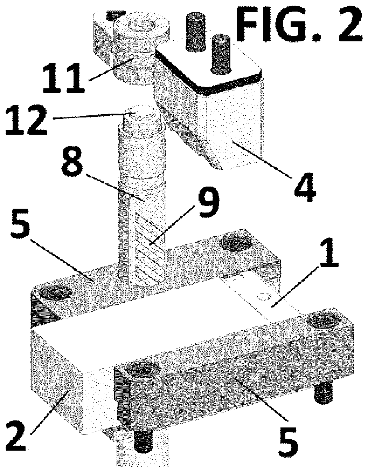

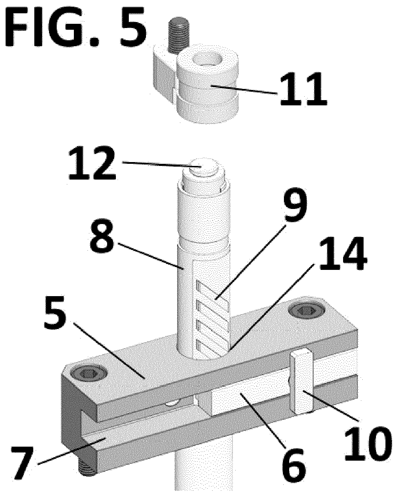

As it can be seen in the figures, this traction element (11) moves considering the slider rail (5) and, upon reaching the final position, shown in figures 2 and 5, it separates from said shaft (12).

This slider rail (5) has a housing at each end to place fixing screws (13) to attach it to a mold plate where the system will be located. Furthermore, the slider rail (5) comprises a hole (14), preferably located in a central position, through which the pushing element (8) and the shaft (12) move.

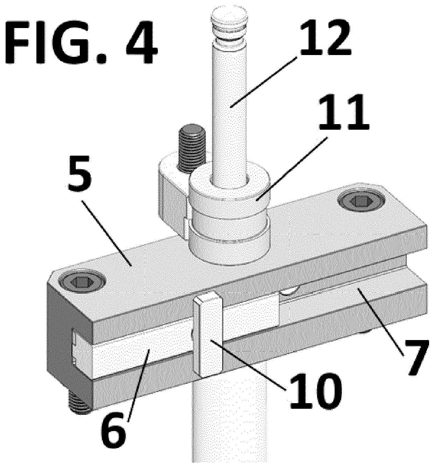

The position shown in Figures 1 and 4 corresponds to a position in which the mold is closed, while the position shown in Figures 2 and 5 corresponds to a position in which the mold is open.

As indicated above, to move from one position to the other, the rack (6) performs a controlled sliding and this sliding is precisely the energy force that is used to move the slider body (1), which is the objective of this application.

To do this, the movement of the traction element (11) is activated, and said movement causes the displacement of the pushing element (8), which through its teeth (9), in turn causes the sliding of the rack (6).

Although reference has been made to a specific embodiment of the invention, it is evident to a person skilled in the art that the described slider assembly is susceptible to numerous variations and modifications, and that all the mentioned details can be replaced by others technically equivalent, without deviating from the scope of protection defined by the attached claims.

## Claims

1. Slider assembly for injection molds, comprising:
- a slider body (1);
- a figure insert (2) coupled to the slider body (1);
- a slider rail (5) along which a rack (6) moves, said rack (6) being attached to the slider body (1);
**characterized in that** it also comprises:
a traction element (11) that moves a pushing element (8), the pushing element (8) being provided with teeth (9) that engage with the rack (6), so that the movement of the pulling element traction (11) causes the movement of the slider body (1) through the rack (6) and the pushing element (8).

2. Slider assembly for injection molds according to claim 1, wherein the rack (6) and the pushing element (8) are perpendicular to each other.

3. Slider assembly for injection molds according to claim 1 or 2, wherein a shaft (12) passes through the pushing element (8) and the pulling element (11), the pushing element (8) and the traction element (11) being moveable along the shaft (12).

4. Slider assembly for injection molds according to any one of the preceding claims, wherein the slider rail (5) comprises a slot (7), through which the rack (6) moves.

5. Slider assembly for injection molds according to any one of the preceding claims, wherein the rack (6) comprises a hook (10).

6. Slider assembly for injection molds according to any one of the preceding claims, wherein the traction element (11) is a bushing.

7. Slider assembly for injection molds according to any one of the preceding claims, wherein the slider rail (5) comprises a hole (14) through which the pushing element (8) and the shaft (12).
